# EUROPEAN PATENT APPLICATION

(11) **EP 1 480 174 A1**
(43) Date of publication of application: **24.11.2004**
(21) Application number: 03291163.8
(22) Date of filing: 19.05.2003
(51) Int. Cl.: G07F 7/10, G07F 7/00

(54) **A method for making a reliable time available on a smart card provided with a timer**

(71) Applicant: Axalto S.A., 92120 Montrouge (FR)
(72) Inventor: Joffray, Olivier, 78810 Feucherolles (FR); Barbe, Serge, 78117 Chateaufort (FR)
(74) Representative: Renault, Patricia Marie Jacqueline

(57) **Abstract**

The invention concerns a method for making a reliable time available on a smart card provided with a timer, comprising the steps of :
- sending to the card a reference time issued from a reliable time source ;
- initializing said timer in the card with said reference time received ; and
- executing at least one operation based on the time delivered by the timer.

The invention is particularly used for synchronizing secure databases, performing banking funds transfers, and playing LOTO.

## Description

### 1 Technical application field

The invention described herein concerns a method for making a reliable time available on a smart card provided with a timer. It may be applicable to any smart card application performing operation using date and time value. This may be data synchronization, applet execution, transaction stamping, secure off-line browsing, Digital Right management...

### 2 State of the art

Real Time Clocks (RTC) chips are electronic components dedicated for providing the current date and time to a system on which they are installed.

For example, they are installed on computer main board, and a battery provides them the required energy to continue working even when the computer is switched off.

Usually, the date and time are provided in number of seconds elapsed since January 1^{st} 1970. A dedicated function transforms it into standard date and time (e.g. jj/mm/aaa hh:mm:ss).

Because no smart card available on the market embeds an autonomous power source such as a battery, no smart card already embeds a RTC, nor can calculate the date and time by itself.

For this reason, when the operation to be performed by the card requires taking into account the date and time, this information is provided to the card by an associated car reader or card-accepting device (CAD) cooperating with the card. For instance, this is what is happening when people purchase goods or services at a merchant desk using CB (Carte Bancaire) French banking card.

A drawback of this approach is that the CAD generally is a non-secure device, so that the date and time information transmitted to the card cannot be regarded as a reliable information on which important operations can be based for purpose of subsequent authentication.

### Technical issue / Improvement :

The ISO 7816 standards describe the smart card behavior as an object answering to the CAD requests (master [CAD] 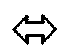 slave [CARD]). New technologies are going to change this behavior and will provide the smart card with its own autonomy.

IP (Internet Protocol) smart cards such as that described in patent application WO 00/10139 A1 embed a WEB server able to answer to a browser request (HTTP "Get" function for example). Consequently, the "WEB" world opens many new possibilities that would require a RTC to be embedded in smart cards : for example, databases synchronization upon card request; time stamping for DRM (Digital Right Management) functions; time stamping for electronic purse, WEB based games, IQ (Intelligence Quotient) test, connected games (Games require a RTC in the smart card if the time needs to be precisely and securely measured. For example when prizes are distributed to the winners)...

Most applications can use a WEB browser as the user interface base, and the programming capabilities of the smart card (e.g. JavaCard) can be used to complete the browser functions.

### Goal of the present invention :

The goal is providing a method for managing the RTC function in a smart card having no power battery, more particularly for making sure that the date and time provided by the RTC in the card at any required moment are reliable, that is neither manipulated by any user or defrauder, nor wrong due to an operation/transmission error, but corresponding to date and time of an undeniable authority.

Other complementary goals are the following ones :
1. To use the smart card RTC to support several time zones, to manage alarms, to time, to initiate actions upon RTC signal such as time-out or alarm...
2. To provide open smart card applications with all timing functions such as the ones described in paragraph 3 hereunder.
3. To be able to support several clock values corresponding to different trusted clock servers.
4. To provide all that listed from points [1] to [3] here above with the smart card security level.

### 3 The invention

Generally speaking, the invention consists in a method for making a reliable time available on a smart card provided with a timer, comprising the steps of :
- sending to the card a reference time issued from a reliable time source ;
- initializing said timer in the card with said reference time received ; and
- executing at least one operation based on the time delivered by the timer.

In an advantageous embodiment, the method further comprises the step of defining a limit of use of the timer so initialized, beyond which a new initialization by a reliable time source is necessary for executing a further operation requiring a reliable time.

In another advantageous embodiment, the method further comprises the steps of :
- making the card sending to said reliable time source a first time information based on said reference time received ;
- comparing in said reliable time source said first time information with a second time information based on said reference time issued from the reliable time source ;
- reinitializing said timer in the card, in case any difference between said first and second time informations is beyond a predetermined limit.

### 3.1 Embedding a RTC in a smart card

A preliminary step of the invention is to include a RTC in a smart card. The smart card may optionally also embed a battery to continue providing energy to the RTC when a CAD do not powers the card anymore.

The RTC may be a dedicated hardware part of the smart card, or may be implemented as a piece of software assuming an internal reference clock is available in the card to perform the correct RTC increment.

An internal clock is required because the external clock the CAD applied to the card in the prior art does not have a fixed value (vary from 1 to 5MHz), and may vary from a device to another. Accordingly, it cannot constitute an appropriate clock reference for providing date and time.

### 3.2 RTC secure loading

If the smart card RTC is to be used as a time reference for secured operations, it should be loaded securely. When properly initialized, the RTC security is ensured by the smart card that is a secure component.

The RTC setup should be performed using a trusted third party clock providing a Trusted Clock (TC)). Typically, said third party is a distant server.

TC issues a message that includes the date and time and a signature guarantying the data origin. There are several manners to sign the message. One of them consists in using the PKI (Public Key Infrastructure).

As the message transportation may take some time depending on path it takes, there should be a protocol between the TC and the smart card to ensure the value of the card RTC does not vary too much with respect to the TC value.

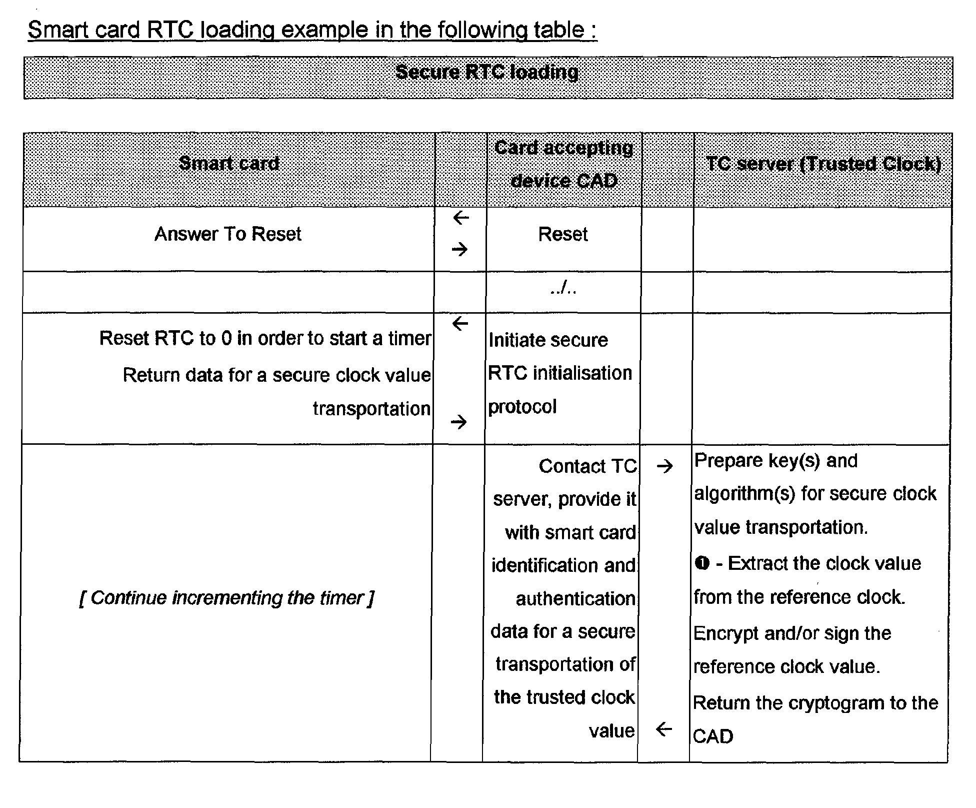

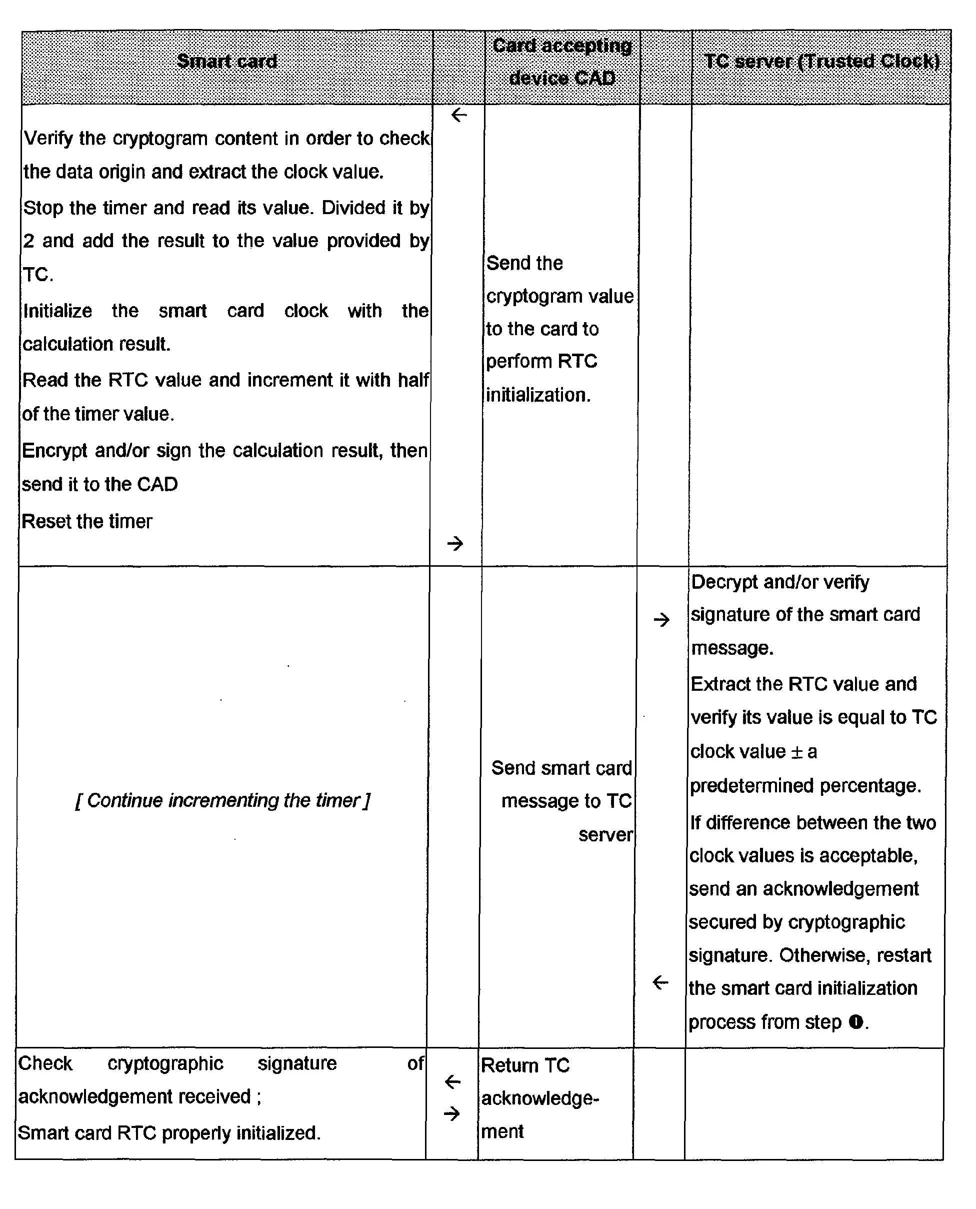

### 3.3 Versatile RTC

The smart card may use the RTC to provide various types of services:
- Several time zones.
- Alarms.
- Timers.
- Agenda management.

For a single clock, it is easy to support many functions, all based on the RTC value.

### 3.4 Interfacing the clock functions with smart card applications

Smart card applications may need to access to the RTC functions. Thus, several interfaces should be provided to applications such as the JavaCard applets.

### 3.5 Multiple Trusted Clocks server support

A smart card can be loaded with different applications, and each application may need the card to be synchronized with its own TC server. Reserving a register for each of the clocks is a solution. Each register would store the time difference between the smart card clock and the TC server. Using the same principle, it is also very easy to support several time zones.

### 3.6 A secure RTC

The RTC implementation should be performed in order to guarantee the whole security required.

Moreover, there should be a maximum time between two RTC reloadings, as a smart card clock will inevitably diverge from the TC server.

This maximum time between two RTC reloadings may be defined by the smart card itself according to the knowledge of its own weaknesses.

TC servers may also provide some configuration parameters to modify the smart card RTC reloading period.

TC servers may also use other functions to control the smart card RTC drift.

If several TC servers are handled (i.e. several configuration parameters), the maximum time between two RTC reloadings should be the smallest value of the servers' requirements.

### 3.7 Advantages of the invention

Embedding a secure RTC in a smart card has numerous advantages. This is particularly true for applications requiring secured time stamping, and for which it is not possible to ensure a permanent link with a server.

The following applications would take advantage of having a secure RTC in the smart card :
- Synchronizing secure databases: It might be useful to access some data at any time, even when it is often changing, or when it is not convenient to query the server.
   In such a case, the smart card RTC is useful to order server/smart card databases synchronization. The data transfer can be very secure (cryptography), and the data are saved in a secure place : the smart card.
   This is very useful for all confidential data such as banking account, mails, goods prices...
   Having the data stored in the smart card; it is then possible to securely check them locally at any time (i.e. no network connection is required).
- Performing banking funds transfers: when checking its banking account, a user may want to perform some transfers from its check account to one of its saving accounts. With a stamped date the bank is able to perform the clearing using authenticated data, thus being sure of the user account at any time.
- Playing LOTO at 18:55 when the time limit is 19:00. The gambling message can be certified with a time stamp generated by the smart card. It is then very easy to send it when the network becomes available, even if the time limit is over.

### 4 Implementation example

### 4.1 Introduction

This example consists in securely browsing banking accounts and transferring funds from a cellular handset at any time (i.e. even if the network is not available).

It uses the following :
- An advanced cellular handset connected to the Internet
- An advanced SIM card embedding a JavaCard virtual machine and a secure RTC
- A WEB bank server to exchange data with the SIM card

### 4.2 Components characteristics

### 4.2.1 Cellular handset characteristics

The cellular handset shall be immediately connected to the Internet when, being compatible with GPRS or UMTS standards, it recognizes the network. It should have an IP address that may change at each startup (a fixed IP address is not mandatory).

It shall embed the required driver to enable the smart card to communicate using its own IP address. A solution to this requirement is to embed the drivers of the communication layer defined in above-mentioned patent application WO 00/10139 A1 in which the smart card embeds a WEB server. It allows the smart card to be accessed using the Internet Protocol (like any Internet client or server). This software layer encapsulates incoming IP frames that are sent to the card into ISO 7816-3 protocol. The card, also embedding these drivers, becomes an Internet node.

The handset shall embed an Internet client browser that is able to query the smart card by sending requests to its IP address.

### 4.2.2 SIM card characteristics

The SIM card embeds at least the following:
- The SIM standards requirements to allow the handset to access the cellular network.
- The drivers of above-mentioned patent application WO 00/10139 A1 to encapsulate IP frame into ISO 7816-3 protocol.
- The secure RTC.
- A WEB server able replying to incoming queries and to exchange files with the distant bank server (using FTP or HTTP protocol for instance).
- A JavaCard virtual machine.
- An XML parser.
- Cryptographic means to manage keys, encrypt, decrypt, sign...
- All complementary software and drivers to authorize all elements listed here above to interact.

### 4.2.3 WEB bank server characteristics

The (distant) WEB bank server is a standard server embedding means to exchange files with the SIM card WEB server. It includes means for delivering a Trusted Clock TC.

### 4.2.4 Complementary characteristics

The bank server and the card server should share some cryptographic keys in order to exchange files and or queries securely (in order to protect the user banking information). The protocol used here is not important as long as the security level is strong enough.

### 4.3 Secure off-line banking accounts browsing and funds transfer

It works as follows :
- When the handset is switched on normal startup, the process occurs. The smart card connects itself to the bank server in order to synchronize its RTC according to the procedure described in the above-mentioned table : the Trusted Clock is sent to the card and stored for initializing its RTC.
- Regularly, and preferably when the network is underused, the smart card and the bank server synchronize the user banking account data. The bank server transfers to the card both the data to display in an XML file and the pages format in an HTML file. Locally, the smart card WEB server is able to prepare a HTML page with the data received in order to answer to the handset browser queries with a ready to use HTML page.
- When the user wants to browse his account, he can require the handset browser to query the smart card WEB server instead of having access to the bank server.
- If the user wants to perform a fund transfer, the operation is ordered through the smart card WEB browser interface. Depending on the actions performed, a JavaCard applet may be invoked to prepare a message including the whole transfer information. The transfer order can be securely stamped by the smart card RTC.
- Such a scheme can be easily completed with a stock exchange browsing and order sending application.

## Claims

1. A method for making a reliable time available on a smart card provided with a timer, comprising the steps of:
- sending to the card a reference time issued from a reliable time source;
- initializing said timer in the card with said reference time received; and
- executing at least one operation based on the time delivered by the timer.

2. A method according to claim 1, further comprising the step of defining a limit of use of the timer so initialized, beyond which a new initialization by a reliable time source is necessary for executing a further operation requiring a reliable time.

3. A method according to claim 1, further comprising the steps of :
- making the card sending to said reliable time source a first time information based on said reference time received ;
- comparing in said reliable time source said first time information with a second time information based on said reference time issued from the reliable time source ;
- reinitializing said timer in the card, in case any difference between said first and second time informations is beyond a predetermined limit.
